# EUROPEAN PATENT APPLICATION

(11) **EP 4 672 825 A1**
(43) Date of publication of application: **31.12.2025**
(21) Application number: 23923442.0
(22) Date of filing: 24.02.2023
(51) Int. Cl.: H04W 52/02

(54) **TERMINAL DEVICE STATE CONTROL METHOD, DATA SENDING METHOD AND APPARATUS THEREFOR**

(71) Applicant: Beijing Xiaomi Mobile Software Co., Ltd., Beijing 100085 (CN)
(72) Inventor: YANG, Xing, Beijing 100085 (CN)
(74) Representative: Gunzelmann, Rainer
(86) International application number: PCT/CN2023/078273
(87) International publication number: WO 2024/174267

(57) **Abstract**

Disclosed in the embodiments of the present disclosure are a terminal device state control method, a data sending method and an apparatus therefor. The terminal device state control method comprises: a terminal device determining a prediction output value of an artificial intelligence (AI) model, the AI model being used for predicting related information of data to be received by the terminal device; and, according to the prediction output value, the terminal device controlling its state. The embodiments of the present disclosure enable terminal devices to automatically control their states according to AI prediction output values, so as to achieve good energy-saving effects, and can avoid data transmission delay and loss.

## Description

### TECHNICAL FIELD

The disclosure relates to a field of communication technology, in particular to a method for controlling a state of a terminal, a method for sending data and an apparatus thereof.

### BACKGROUND

A terminal may constantly monitor a physical downlink control channel (PDCCH). A network device (such as a base station) may send control information on the PDCCH to schedule uplink and downlink resources for the terminal. In order to reduce energy consumption by the terminal, a discontinuous reception (DRX) function has been introduced. The terminal determines whether it is in an active state based on a DRX configuration. The terminal will continue to monitor the PDCCH in the active state, while the terminal does not need to monitor the PDCCH in the sleep state. This may reduce a time for the terminal monitoring of the PSCCH, thus achieving the purpose of saving power.

In the related art, a DRX configured by the network device for the terminal is determined by the network device by estimating a data arrival cycle and a delay of the terminal, that is, the network device configures the corresponding DRX for the terminal by estimating the data arrival cycle and the delay of the terminal. However, the network device cannot accurately estimate a data arrival time point of the terminal, so that the DRX configured by the network device for the terminal may not be suitable for the terminal. The terminal cannot accurately determine whether it is in the active state and cannot monitor the PDCCH in time, resulting in data that needs to be sent to the terminal not being sent to the terminal in time, leading to a delay or loss of data.

### SUMMARY

Embodiments of the disclosure provide a method for controlling a state of a terminal, a method for sending data and an apparatus thereof, which may be applied to a 5th generation mobile communication technology (5G) system, etc. With making a prediction and an inference by an AI (artificial intelligence) model, and controlling the state of the terminal according to a predicted output value of the AI model, the terminal may control its state by itself, capable of achieving a better energy-saving effect, and avoiding a delay and loss of data in transmission.

In a first aspect, embodiments of the present disclosure provide a method for controlling a state of a terminal. The method is performed by the terminal and includes: determining a predicted output value of an AI model, in which, the AI model is configured to predict relevant information of data to be received by the terminal; controlling the state of the terminal according to the predicted output value.

In the technical solution, a prediction and an inference are made through the AI model, and the state of the terminal is controlled according to the predicted output value of the AI model. Therefore, the terminal may control its state by itself, capable of achieving a better energy-saving effect, and avoiding a delay and loss of data in transmission.

In an implementation, the method further includes: predicting the relevant information of the data to be received by the terminal based on the AI model.

In a possible implementation, predicting the relevant information of the data to be received by the terminal based on the AI model includes: periodically predicting the relevant information of the data to be received by the terminal based on the AI model.

In a possible implementation, predicting the relevant information of the data to be received by the terminal based on the AI model includes: acquiring service information and/or personal preference information of the terminal; predicting, according to the service information and/or the personal preference information, the relevant information of the data to be received by the terminal by using the AI model.

In an implementation, the predicted output value indicates at least one of: presence or absence of arrival of the data to be received; a probability or a credibility of arrival of the data to be received; an arrival time of the data to be received; a delay requirement of the data to be received; or a service type of the data to be received.

In a possible implementation, controlling the state of the terminal according to the predicted output value includes: in a case where the predicted output value indicates the presence of arrival of the data to be received, controlling the terminal to enter an active state.

In a possible implementation, controlling the state of the terminal according to the predicted output value includes: in a case where the predicted output value indicates the probability or the credibility of arrival of the data to be received, and the predicted output value is greater than a first threshold, controlling the terminal to enter an active state.

In a possible implementation, controlling the state of the terminal according to the predicted output value includes: in a case where the predicted output value indicates the arrival time and the delay requirement of the data to be received, determining a next active time of the terminal; determining, according to the arrival time and the delay requirement, whether a transmission delay requirement of the data to be received is met before the next active time arrives; in a case where the transmission delay requirement of the data to be received is not met before the next active time arrives, controlling the terminal to enter an active state.

In a possible implementation, controlling the state of the terminal according to the predicted output value includes: in a case where the predicted output value indicates the service type of the data to be received, and the service type is consistent with a predetermined service type, controlling the terminal to enter the active state.

In a possible implementation, the predetermined service type is provided by a network device.

In a possible implementation, determining the next active time of the terminal includes: receiving discontinuous reception (DRX) configuration information sent by a network device; determining the next active time of the terminal according to the DRX configuration information.

In an implementation, a duration for which an active state is maintained is configured by a network device.

In a possible implementation, the method further includes: starting a timer when controlling the terminal to enter the active state, in which, a duration of the timer is configured by the network device; maintaining the active state of the terminal before expiration of the timer.

In an implementation, the duration for which the active state is maintained is consistent with a length of a delay requirement of the data to be received.

In a possible implementation, the method further includes: determining the length of the delay requirement of the data to be received according to the predicted output value; or determining a service type of the data to be received according to the predicted output value, and determining the length of the delay requirement of the data to be received according to the service type.

In a possible implementation, the data to be received is downlink data.

In a second aspect, embodiments of the present disclosure provide a method for sending data. The method is performed by a network device and includes: after receiving data to be sent to a terminal, sending a physical downlink control channel (PDCCH) to the terminal to schedule a downlink resource for the terminal; sending downlink data to the terminal on the scheduled downlink resource; determining whether hybrid automatic repeat reque st (HARQ) feedback information of the terminal is received, and determining whether to send the downlink data again, in which, the HARQ feedback information is determined by whether the terminal is capable of entering an active state according to a predicted output value of an AI model and receiving the PDCCH.

In the technical solution, the terminal makes a prediction and an inference through the AI model, and controls the state of the terminal according to the predicted output value of the AI model. Therefore, the terminal may control its state by itself, capable of achieving a better energy-saving effect, and avoiding a delay and loss of data in transmission. In addition, the network device may determine whether the HARQ feedback information of the terminal is received, and determine whether to send the downlink data again, the HARQ feedback information is determined by whether the terminal is capable of entering the active state according to the predicted output value of the AI model and receiving the PDCCH, causing the terminal to receive data in time, and avoiding the delay and loss of data in transmission.

In an implementation, determining whether the HARQ feedback information of the terminal is received, and determining whether to send the downlink data again includes at least one of: determining that the HARQ feedback information of the terminal is received, and in a case where the HARQ feedback information is positive acknowledgment (ACK) information, determining to send no downlink data; determining that the HARQ feedback information of the terminal is received, and in a case where the HARQ feedback information is negative acknowledgement (NACK) information, determining to send the downlink data again; or determining that no HARQ feedback information of the terminal is received, and determining to send the downlink data again.

In a possible implementation, determining to send the downlink data again includes: determining a next active time of the terminal; sending the downlink data again at the next active time.

In a possible implementation, determining the next active time of the terminal includes: determining discontinuous reception (DRX) configuration information configured by the network device for the terminal; determining the next active time of the terminal according to the DRX configuration information.

In an implementation, the method further includes: sending configuration information to the terminal, in which, the configuration information indicates a duration for which the active state is maintained.

In an implementation, the method further includes: sending DRX configuration information to the terminal, in which, the DRX configuration information instructs the terminal to determine a next active time of the terminal.

In a third aspect, an embodiment of the present disclosure provides a communication apparatus. The apparatus has part or all of functions of the terminal for implementing the method as described in the first aspect. For example, functions of the communication apparatus may have functions of implementing part or all of embodiments of the present disclosure, or may have functions of implementing any one of embodiments of the present disclosure separately. The functions may be implemented through hardware or by executing corresponding software through hardware. The hardware or software includes one or more units or modules corresponding to the above functions.

In an implementation, a structure of the communication apparatus may include a transceiver module and a processing module, and the processing module is configured to support the communication apparatus in executing the corresponding functions in the above method. The transceiver module is used to support communication between the communication apparatus and other devices. The communication apparatus may further include a storage module, configured to be coupled with the transceiver module and the processing module, and store a computer programs and data necessary for the communication apparatus.

In an implementation, the processing module is configured to determine a predicted output value of an AI model, in which, the AI model is configured to predict relevant information of data to be received by a terminal; the processing module is further configured to control the state of the terminal according to the predicted output value.

In an implementation, the processing module is configured to predict the relevant information of the data to be received by the terminal based on the AI model.

In a possible implementation, the processing module is configured to periodically predict the relevant information of the data to be received by the terminal based on the AI model.

In a possible implementation, the processing module is configured to acquire service information and/or personal preference information of the terminal; predict, according to the service information and/or the personal preference information, the relevant information of the data to be received by the terminal by using the AI model.

In an implementation, the predicted output value indicates at least one of: presence or absence of arrival of the data to be received; a probability or a credibility of arrival of the data to be received; an arrival time of the data to be received; a delay requirement of the data to be received; or a service type of the data to be received.

In a possible implementation, the processing module is configured to, in a case where the predicted output value indicates the presence of arrival of the data to be received, control the terminal to enter an active state.

In a possible implementation, the processing module is configured to, in a case where the predicted output value indicates the probability or the credibility of arrival of the data to be received, and the predicted output value is greater than a first threshold, control the terminal to enter an active state.

In a possible implementation, the processing module is configured to, in a case where the predicted output value indicates the arrival time and the delay requirement of the data to be received, determine a next active time of the terminal; determine, according to the arrival time and the delay requirement, whether a transmission delay requirement of the data to be received is met before the next active time arrives; in a case where the transmission delay requirement of the data to be received is not met before the next active time arrives, control the terminal to enter an active state.

In a possible implementation, the processing module is configured to, in a case where the predicted output value indicates the service type of the data to be received, and the service type is consistent with a predetermined service type, control the terminal to enter the active state.

In a possible implementation, the predetermined service type is provided by a network device.

In an implementation, the transceiver module is configured to, receive discontinuous reception (DRX) configuration information sent by a network device; determine the next active time of the terminal according to the DRX configuration information.

In an implementation, a duration for which an active state is maintained is configured by a network device.

In a possible implementation, the processing module is configured to, start a timer when controlling the terminal to enter the active state, in which, a duration of the timer is configured by the network device; maintain the active state of the terminal before expiration of the timer.

In an implementation, the duration for which the active state is maintained is consistent with a length of a delay requirement of the data to be received.

In an implementation, the processing module is further configured to, determine the length of the delay requirement of the data to be received according to the predicted output value; or determine a service type of the data to be received according to the predicted output value, and determine the length of the delay requirement of the data to be received according to the service type.

In an implementation, the data to be received is downlink data.

As an example, the processing module may be a processor, the transceiver module may be a transceiver or a communication interface, and the storage module can be a memory.

In a fourth aspect, an embodiment of the present disclosure provides another communication apparatus. The apparatus has part or all of functions of the network device for implementing the method as described in the second aspect. For example, functions of the communication apparatus may have functions of implementing part or all of embodiments of the present disclosure, or may have functions of implementing any one of embodiments of the present disclosure separately. The functions may be implemented through hardware or by executing corresponding software through hardware. The hardware or software includes one or more units or modules corresponding to the above functions.

In an implementation method, a structure of the communication apparatus may include a transceiver module and a processing module, and the processing module is configured to support the communication apparatus in executing the corresponding functions in the above method. The transceiver module is used to support communication between the communication apparatus and other devices. The communication apparatus may further include a storage module, configured to be coupled with the transceiver module and the processing module, and store a computer programs and data necessary for the communication apparatus.

In an implementation, the transceiver module is configured to, after receiving data to be sent to a terminal, send a PDCCH to the terminal, the processing module is configured to schedule a downlink resource for the terminal; the transceiver module is further configured to determine whether HARQ feedback information of the terminal is received, and determine whether to send the downlink data again, in which, the HARQ feedback information is determined by whether the terminal is capable of entering an active state according to a predicted output value of an AI model and receiving the PDCCH.

In a possible implementation, the processing module is specifically configured to, determine that the HARQ feedback information of the terminal is received, and in a case where the HARQ feedback information is ACK information, determine to send no downlink data; or determine that the HARQ feedback information of the terminal is received, and in a case where the HARQ feedback information is NACK information, determine to send the downlink data again; or determine that no HARQ feedback information of the terminal is received, and determine to send the downlink data again.

In a possible implementation, the processing module is specifically configured to, determine a next active time of the terminal; sending the downlink data again at the next active time.

In a possible implementation, the processing module is specifically configured to, determine DRX configuration information configured by the network device for the terminal; determining the next active time of the terminal according to the DRX configuration information.

In an implementation, the transceiver module is further configured to, send configuration information to the terminal, in which, the configuration information indicates a duration for which the active state is maintained.

In an implementation, the transceiver module is further configured to, send DRX configuration information to the terminal, in which, the DRX configuration information instructs the terminal to determine a next active time of the terminal.

In a fifth aspect, an embodiment of the present disclosure provides a communication apparatus. The communication apparatus includes a processor. The processor is configured to execute the method as described in the first aspect when invoking a computer program in memory.

In a sixth aspect, an embodiment of the present disclosure provides a communication apparatus. The communication apparatus includes a processor. The processor is configured to execute the method as described in the second aspect when invoking a computer program in memory.

In a seventh aspect, an embodiment of the present disclosure provides a communication apparatus. The communication apparatus includes a processor and a memory having a computer program stored thereon. The computer program causes the communication apparatus to perform the method as described in the first aspect when performed by the processor.

In an eighth aspect, an embodiment of the present disclosure provides a communication apparatus. The communication apparatus includes a processor and a memory having a computer program stored thereon. The computer program causes the communication apparatus to perform the method as described in the second aspect when performed by the processor.

In a ninth aspect, an embodiment of the present disclosure provides a communication apparatus. The communication apparatus includes a processor and an interface circuit. The interface circuit is configured to receive code instructions and transmit the code instructions to the processor. The processor is configured to run the code instructions, causing the apparatus to perform the method as described in the first aspect.

In a tenth aspect, an embodiment of the present disclosure provides a communication apparatus. The communication apparatus includes a processor and an interface circuit. The interface circuit is configured to receive code instructions and transmit the code instructions to the processor. The processor is configured to run the code instructions, causing the apparatus to perform the method as described in the second aspect.

In an eleventh aspect, an embodiment of the present disclosure provides a communication system. The system includes the communication apparatus as described in the third aspect and the communication apparatus as described in the fourth aspect, or the system includes the communication apparatus as described in the fifth aspect and the communication apparatus as described in the sixth aspect, or the system includes the communication apparatus as described in the seventh aspect and the communication apparatus as described in the eighth aspect, or, the system includes the communication apparatus as described in the ninth aspect and the communication apparatus as described in the tenth aspect.

In a twelfth aspect, an embodiment of the present disclosure provides a computer-readable storage medium. The storage medium is configured to store instructions performed by the terminal as described above. The instructions, when executed, cause the terminal to execute the method as described in the first aspect.

In a thirteenth aspect, an embodiment of the present disclosure provides a computer-readable storage medium. The storage medium is configured to store instructions performed by the network device as described above. The instructions, when executed, cause the network device to execute the method as described in the second aspect.

In a fourteenth aspect, an embodiment of the present disclosure provides a computer program product including a computer program. The computer program product may cause a computer to implement the method as described in the first aspect when running on the computer.

In a fifteenth aspect, an embodiment of the present disclosure provides a computer program product including a computer program. The computer program product may cause a computer to implement the method as described in the second aspect when running on the computer.

In a sixteenth aspect, an embodiment of the present disclosure provides a chip system. The chip system includes at least one processor and an interface, and is configured to support a terminal to implement functions related to the first aspect, such as determining or processing at least one of data and information related to the above method. In a possible design, the chip system further includes a memory, configured to store a computer program and data necessary for the terminal. The chip system may be composed of chips or include a chip and other discrete devices.

In a seventeenth aspect, an embodiment of the present disclosure provides a chip system. The chip system includes at least one processor and an interface, and is configured to support a network device to implement functions related to the second aspect, such as determining or processing at least one of data and information related to the above method. In a possible design, the chip system further includes a memory, configured to store a computer program and data necessary for the network device. The chip system may be composed of chips or include a chip and other discrete devices.

In an eighteenth aspect, an embodiment of the present disclosure provides a computer program. The computer program may cause a computer to implement the method as described in the first aspect when running on the computer.

In a nineteenth aspect, an embodiment of the present disclosure provides a computer program. The computer program may cause a computer to implement the method as described in the second aspect when running on the computer.

### BRIEF DESCRIPTION OF THE DRAWINGS

In order to clearly illustrate technical solutions of embodiments of the disclosure or background, the accompanying drawings required in embodiments of the present disclosure or the background will be explained below.
FIG. 1 is a schematic diagram illustrating an architecture of a communication system provided in an embodiment of the present disclosure.
FIG. 2 is a flowchart illustrating a method for controlling a state of a terminal according to an embodiment of the present disclosure.
FIG. 3 is a flowchart illustrating a method for controlling a state of a terminal according to an embodiment of the present disclosure.
FIG. 4 is a flowchart illustrating a method for sending data according to another embodiment of the present disclosure.
FIG. 5 is a block diagram illustrating a structure of a communication apparatus according to an embodiment of the present disclosure.
FIG. 6 is a block diagram illustrating a structure of another communication apparatus according to another embodiment of the present disclosure.
FIG. 7 is a block diagram illustrating a structure of a chip according to an embodiment of the present disclosure.

### DETAILED DESCRIPTION

Embodiments will be described in detail herein, examples of which are illustrated in the accompanying drawings. The same or similar reference numerals throughout represent the same or similar elements or elements having the same or similar functions. The embodiments described below with reference to the accompanying drawings are illustrative and are intended to be used to explain the present disclosure, and should not be construed as limitations on the present disclosure. In the description of the present disclosure, unless otherwise specified, "/" means or, for example, A/B may mean A or B; "and/or" in this disclosure is merely a description of an association between associated objects, which means presence of three relationships, for example, A and/or B may mean that: A exists alone, A and B exist simultaneously, and B exists alone.

The terms used in embodiments of the present disclosure are only for the purpose of describing specific embodiments, and are not intended to limit embodiments of the present disclosure. The singular forms "a" and "the" used in embodiments of the present disclosure and the appended claims are also intended to include plural forms unless the context clearly indicates otherwise.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "if' as used herein may be interpreted as "upon" or "when" or "in response to determining".

Embodiments will be described in detail herein, examples of which are illustrated in the accompanying drawings. The same or similar reference numerals throughout represent the same or similar elements or elements having the same or similar functions. The embodiments described below with reference to the accompanying drawings are illustrative and are intended to be used to explain the present disclosure, and should not be construed as limitations on the present disclosure.

A terminal may constantly monitor a physical downlink control channel (PDCCH). A network device (such as a base station) may send control information on the PDCCH to schedule uplink and downlink resources for the terminal. In order to save energy consumption of the terminal, a discontinuous reception (DRX) function has been introduced. The terminal determines whether it is in an active state based on a DRX configuration. The terminal needs to monitor the PDCCH in the active state, while the terminal does not need to monitor the PDCCH in the sleep state. This may reduce a time for the terminal monitoring of the PSCCH, thus achieving the purpose of saving power.

In a case where the terminal is in a connected state, the DRX configuration includes an inactive timer (also referred to as an inactivity timer), an on duration timer, a cycle, a starting offset, an uplink HARQ (hybrid automatic repeat request) RTT (round-trip time) timer, a downlink HARQ RTT timer, an uplink retransmission timer, a downlink retransmission timer, etc. The network device may configure the cycle and the starting offset for the terminal, which may be used to determine a periodic starting time point of the on duration timer. Whenever the terminal receives a DCI (downlink control information) carrying its own C-RNTI (cell-radio network temporary identifier) on the PDCCH, the inactivity timer may start. The terminal monitors a PDCCH only during a wake-up period, and the terminal may not monitor the PDCCH at other times, thus saving power consumption. In a case where the terminal receives a MAC (media access control) PDU (protocol data unit), the terminal sends feedback to a base station and starts the downlink HARQ RTT timer corresponding to a HARQ process. In a case where the downlink HARQ RTT timer expires, the downlink retransmission timer starts. In a case where the terminal sends a PUSCH (physical uplink shared channel) transmission, the terminal starts the uplink HARQ RTT timer corresponding to the HARQ process. In a case where the uplink HARQ RTT timer expires, the uplink retransmission timer starts. The wake-up time includes operations of the on duration timer, the inactivity timer, the uplink retransmission timer, and the downlink retransmission timer.

In a case where the terminal is in an idle state or a non-connected state, the DRX configuration includes a DRX cycle T, the number of paging frames N in the DRX cycle, the number of paging occasions Ns included in one paging frame, a paging frame offset PF_offset, and an identifier UE_ID of the terminal. The paging occasion is a set of PDCCH monitoring occasions, and the PDCCH monitoring occasion may include a plurality of time units, such as subframes and slots.

In the related art, a DRX configured by the network device for the terminal is determined by the network device estimating a data arrival cycle and a delay of the terminal, that is, the network device configures the corresponding DRX for the terminal by estimating the data arrival cycle and the delay of the terminal. However, the network device (such as the base station) cannot obtain an encryption service and personal preference information of the terminal, and the network device cannot accurately estimate a data arrival time point of the terminal. The network device may configure a DRX with a shorter cycle for the terminal, but this may increase energy consumption of the terminal. If the network device configures a DRX with a longer cycle for the terminal, it needs to wait until the next active time after arrival of data and data cannot be sent to the terminal in time, leading to a delay or loss of data.

In view of this, embodiments of the disclosure provide a method for controlling a state of a terminal, a method for sending data and an apparatus thereof. With making a prediction and an inference by an AI (artificial intelligence) model, and controlling the state of the terminal according to a predicted output value of the AI model, the terminal may control an active state by itself, capable of achieving a better energy-saving effect, and avoiding a delay and loss of data in transmission.

In order to better understand a method for controlling a state of a terminal, a method for sending data and an apparatus thereof proposed in an embodiment of the present disclosure, a communication system for which the embodiment of the present disclosure is applied is first described below.

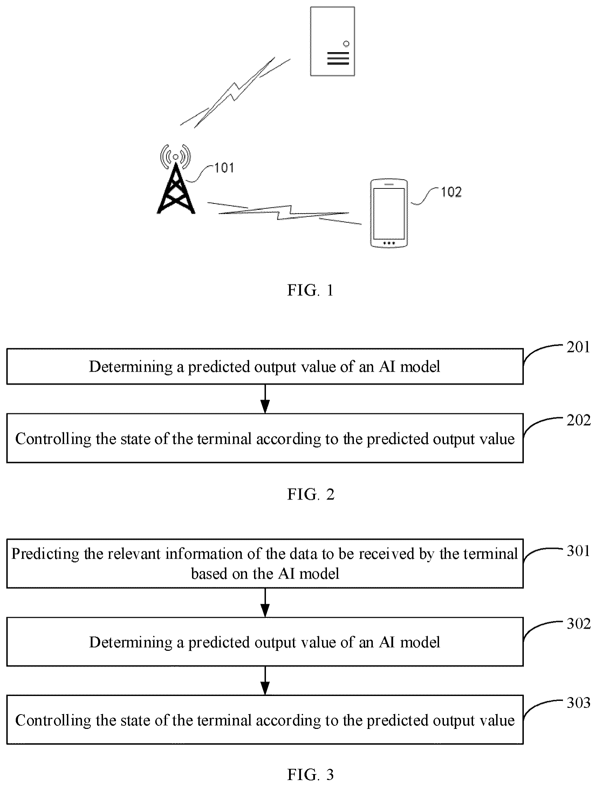

Please refer to FIG. 1, FIG. 1 is a structural diagram of a communication system provided by an embodiment of the disclosure. The communication system may include, but is not limited to, one network device and one terminal. The number and the form of devices illustrated in FIG. 1 are only for examples and do not constitute a limitation on the embodiments of the disclosure. The communication system may include two or more network devices and two or more terminals in practical applications. The communication system illustrated in FIG. 1a includes, for example, a network device 101 and a terminal 102.

It is noteworthy that the technical solutions of the embodiments of the disclosure may be applied to various communication systems, such as, a long term evolution (LTE) system, a 5th generation (5G) mobile communication system, a 5G NR (new radio) system, or other future new mobile communication systems. It should also be noted that a sidelink in an embodiment of the present disclosure may also be called as a side link or a direct link.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (Wi-Fi) system. The specific technology and specific device form adopted by the network device are not limited in the embodiments of the disclosure. The network device according to the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal 102 in embodiments of the disclosure is an entity on a user side for receiving or transmitting signals, such as a cellular phone. The terminal may also be referred to as a terminal device, a user equipment (UE), a mobile station (MS), a mobile terminal (MT), and the like. The terminal can be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

A method for controlling a state of a terminal, a method for sending data and an apparatus thereof provided by the present disclosure will be introduced in detail below with reference to the accompanying drawings.

Reference is made to FIG. 2, which is a flowchart illustrating a method for controlling a state of a terminal according to an embodiment of the present disclosure. It is noted that the method may be performed by a terminal. For example, in a 5G system, an AI model may be used to predict and infer a PDCCH monitoring occasion to control the terminal to enter an active state. As illustrated in FIG. 2, the method may include, but is not limited to, the following steps.

At step 201, a predicted output value of an AI model is determined.

In an embodiment of the present disclosure, the AI model is configured to predict relevant information of data to be received by the terminal.

In an implementation, the relevant information of the data to be received may include, but is not limited to, at least one of: presence or absence of arrival of the data to be received; a probability or a credibility of arrival of the data to be received; an arrival time of the data to be received; a delay requirement of the data to be received; or a service type of the data to be received. The service type may be, but is not limited to, voice, video, emergency service, short message, multimedia, low-latency service, game, etc. In an implementation, the data to be received may be downlink data.

In an example, the AI model may be pre-trained. For example, the AI model may be trained by training data, so that the trained AI model may be used to predict the relevant information of the data to be received by the terminal. In a possible implementation, the training data may include, but is not limited to, service information and/or personal preference information of the terminal. The service may be an encrypted service or a non-encrypted service (such as an ordinary service). The encrypted service may be understood as a service that cannot be obtained by the base station side, and the non-encrypted service can be understood as a service that can be obtained by a base station. The service information may include, but is not limited to, a service type, etc. The personal preference information may be understood to include, but is not limited to, personal preferences for usage of the terminal, such as personal preferences for games on the terminal, or personal preferences for watching videos on the terminal. The training data may also include labels corresponding to the service information and/or the personal preference information, and the labels may include, but is not limited to at least one of: presence or absence of arrival of data corresponding to the service information and/or the personal preference information of the terminal, an arrival time of the data corresponding to the service information and/or the personal preference information of the terminal, a delay requirement of the data corresponding to the service information and/or the personal preference information of the terminal, a service type of the data corresponding to the service information and/or the personal preference information of the terminal, etc. In this way, by using the training data, the AI model may be trained through machine learning or deep learning. The AI model learns and obtains a mapping relationship between the service information and/or the personal preference information and the relevant information of the data to be received. Thus, the trained AI model may be used to predict the relevant information of the data to be received by the terminal.

It should be noted that in embodiments of the present disclosure, the AI model can be provided on the terminal. The AI model may be trained on a server on the network side of the communication system, or may be trained on an independent server using the training data, and the trained AI model may be deployed on the terminal. The terminal may adopt the AI model for prediction and inference to determine whether the state of the terminal is to be controlled.

In an embodiment of the present disclosure, the terminal may determine the predicted output value of the AI model, so that the terminal controls the state of the terminal according to the predicted output value.

At step 202, the state of the terminal is controlled according to the predicted output value.

In an embodiment of the present disclosure, the terminal may control the state of the terminal according to the predicted output value of the AI model. In an implementation, the terminal may control the terminal to enter an active state according to the predicted output value of the AI model. In another implementation, the terminal may control the terminal to enter an inactive state according to the predicted output value of the AI model. That is, the terminal may determine whether it is necessary to control the terminal to switch between the active state and the inactive state according to the predicted output value of the AI model. It should be noted that information capable of being indicated by the predicted output value is related to the state in which the terminal is controlled. For example, the predicted output value indicates the presence of arrival of the data to be received, and the terminal is controlled to enter the active state. For example, the predicted output value indicates the absence of arrival of the data to be received, and the terminal is controlled to enter the inactive state. In an example, a correspondence between the information indicated by the predicted output value and the state in which the terminal is controlled may be agreed upon by a protocol, which is not specifically limited in the present disclosure.

In an implementation, in the active state, the terminal monitors the PDCCH.

In the embodiment of the present disclosure,

In the disclosed embodiment, the terminal makes prediction and inference by the AI model, and controls the state of the terminal according to the predicted output value of the AI model. Therefore, the terminal may control its state by itself, capable of achieving a better energy - saving effect, and avoiding a delay and loss of data in transmission.

Reference is made to FIG. 3, which is a flowchart illustrating a method for controlling a state of a terminal according to an embodiment of the present disclosure. It should be noted that the method may be performed by a terminal. As shown in FIG. 3, the method may include, but is not limited to, the following steps.

At step 301, the relevant information of the data to be received by the terminal is predicted based on the AI model.

In an implementation, the relevant information of the data to be received may include, but is not limited to, at least one of: presence or absence of arrival of the data to be received; a probability or a credibility of arrival of the data to be received; an arrival time of the data to be received; a delay requirement of the data to be received; or a service type of the data to be received. In an implementation, the data to be received may be downlink data.

In an example, the AI model may be pre-trained. For example, the AI model may be trained by training data, so that the trained AI model may be used to predict the relevant information of the data to be received by the terminal. In a possible implementation, the training data may include, but is not limited to, service information and/or personal preference information of the terminal. The service may be an encrypted service or a non-encrypted service (such as an ordinary service). The encrypted service may be understood as a service that cannot be obtained by the base station side, and the non-encrypted service can be understood as a service that can be obtained by a base station. The service information may include, but is not limited to, a service type, etc. The personal preference information may be understood to include, but is not limited to, personal preferences for usage of the terminal, such as personal preferences for games on the terminal, or personal preferences for watching videos on the terminal. The training data may also include labels corresponding to the service information and/or the personal preference information, and the labels may include, but is not limited to at least one of: presence or absence of arrival of data corresponding to the service information and/or the personal preference information of the terminal, an arrival time of the data corresponding to the service information and/or the personal preference information of the terminal, a delay requirement of the data corresponding to the service information and/or the personal preference information of the terminal, a service type of the data corresponding to the service information and/or the personal preference information of the terminal, etc. In this way, by using the training data, the AI model may be trained through machine learning or deep learning. The AI model learns and obtains a mapping relationship between the service information and/or the personal preference information and the relevant information of the data to be received. Thus, the trained AI model may be used to predict the relevant information of the data to be received by the terminal.

It should be noted that in embodiments of the present disclosure, the AI model can be provided on the terminal. The AI model may be trained on a server on the network side of the communication system, or may be trained on an independent server using the training data, and the trained AI model may be deployed on the terminal. The terminal may adopt the AI model for prediction and inference to determine whether it is necessary to control the terminal to enter an active state.

In some embodiments of the present disclosure, the terminal may periodically predict the relevant information of the data to be received by the terminal based on the AI model. In an implementation, in a case where the terminal periodically predicts the relevant information of the data to be received by the terminal based on the AI model, a cycle may be provided by the network device. That is, the network device may configure the cycle for the terminal, so that the terminal may periodically predict the relevant information of the data to be received by the terminal based on the AI model. Thus, a power of the terminal may be saved by periodic prediction.

In an example, in some embodiments of the present disclosure, an implementation of predicting the relevant information of the data to be received by the terminal based on the AI model may include: acquiring service information and/or personal preference information of the terminal; predicting, according to the service information and/or the personal preference information, the relevant information of the data to be received by the terminal by using the AI model.

For example, the terminal may obtain the service information and/or the personal preference information of the terminal from the network side. For example, the terminal may obtain the service information and the personal preference information of the terminal from a server of a service provider, input the service information and/or the personal preference information of the terminal into the AI model, and predict the relevant information of the data to be received by the terminal using the AI model, for example, the terminal may predict the presence or absence of arrival of the data to be received, or may predict the possibility or credibility of the arrival of the data to be received, or may predict the delay requirement of the data to be received, or may predict the service type of the data to be received, etc. In an example, the personal preference information may also be stored in a storage module on the terminal side, and the terminal can obtain the personal preference information from the storage module of the terminal. It should be noted that in the technical solution of the present disclosure, collection, storage, usage, processing, transmission, provision and disclosure of user personal information involved are in compliance with the provisions of relevant laws and regulations and do not violate public order and good morals.

At step 302, the predicted output value of the AI model is determined.

In an embodiment of the present disclosure, the AI model is configured to predict relevant information of data to be received by the terminal.

In an implementation, the relevant information of the data to be received may include, but is not limited to, at least one of: the presence or absence of arrival of the data to be received; the probability or the credibility of arrival of the data to be received; the arrival time of the data to be received; the delay requirement of the data to be received; or the service type of the data to be received. In an implementation, the data to be received may be the downlink data.

In an embodiment of the present disclosure, the terminal may predict the relevant information of the data to be received by the terminal based on the AI model and determine the predicted output value of the AI model.

In an implementation, the predicted output value may be configured to indicate but is not limited to at least one of: the presence or absence of arrival of the data to be received; the probability or the credibility of arrival of the data to be received; the arrival time of the data to be received; the delay requirement of the data to be received; or the service type of the data to be received.

In this embodiment, the predicted output value may indicate the presence or absence of arrival of the data to be received.

In this embodiment, the predicted output value may indicate the probability or the credibility of arrival of the data to be received.

In this embodiment, the predicted output value may indicate the presence or absence of arrival of the data to be received and the arrival time of the data to be received.

In this embodiment, the predicted output value may indicate the presence or absence of arrival of the data to be received, the arrival time of the data to be received, and the delay requirement of the data to be received.

In this embodiment, the predicted output value may indicate the presence or absence of arrival of the data to be received, the arrival time of the data to be received, the delay requirement of the data to be received, and the service type of the data to be received.

In this embodiment, the predicted output value may indicate the probability or the credibility of arrival of the data to be received, and the arrival time of the data to be received.

In this embodiment, the predicted output value may indicate the probability or the credibility of arrival of the data to be received, the arrival time of the data to be received, and the delay requirement of the data to be received.

In this embodiment, the predicted output value may indicate the probability or the credibility of arrival of the data to be received, the arrival time of the data to be received, the delay requirement of the data to be received, and the service type of the data to be received.

It should be noted that the above is only an example embodiment of the predicted output value, that is, the predicted output value may also indicates other information, which is not specifically limited in this disclosure and is not repeated.

At step 303, the state of the terminal is controlled according to the predicted output value.

In an example, the terminal may determine whether it is necessary to control the state of the terminal according to the predicted output value of the AI model. In an implementation, the terminal may control the terminal to enter an active state according to the predicted output value of the AI model. In another implementation, the terminal may control the terminal to enter an inactive state according to the predicted output value of the AI model. That is, the terminal may determine whether it is necessary to control the terminal to switch between the active state and the inactive state according to the predicted output value of the AI model. It should be noted that information capable of being indicated by the predicted output value is related to the state in which the terminal is controlled. For example, the predicted output value indicates the presence of arrival of the data to be received, and the terminal is controlled to enter the active state. For example, the predicted output value indicates the absence of arrival of the data to be received, and the terminal is controlled to enter the inactive state. In an example, a correspondence between the information indicated by the predicted output value and the state in which the terminal is controlled may be agreed upon by a protocol, which is not specifically limited in the present disclosure.

In a possible implementation, an implementation of controlling the state of the terminal according to the predicted output value may include: in a case where the predicted output value indicates the presence of arrival of the data to be received (i.e., the arrival of data to be received is predicted), controlling the terminal to enter an active state.

For example, the predicted output value of the AI model may indicate the presence or absence of arrival of the data to be received. In a case where the terminal determines that the predicted output value of the AI model indicates the presence of arrival of data to be received. That is, in a case where the terminal predicts the presence of arrival of data to be received based on the AI model, the terminal is controlled to enter the active state. In the active state, the terminal monitors a PDCCH, and the network device (such as a base station) sends control information on a PDCCH channel to schedule uplink and downlink resources for the terminal. The network device sends the downlink data on a scheduled downlink resource, and the terminal receives the downlink data on the downlink resource. For another example, in a case where the terminal determines that the predicted output value of the AI model indicates the absence of arrival of the data to be received, there is no need to control the terminal to enter the active state, and the terminal maintains the current state, such as the inactive state (or an idle state or a non-connected state).

In a possible implementation, in a case where the predicted output value indicates the service type of the data to be received, and the service type is consistent with a predetermined service type, the terminal is controlled to enter the active state. As an example, the predetermined service may be provided by the network device. As another example, the predetermined service may also be agreed upon by a protocol.

Illustratively, in an implementation, an implementation method of controlling the state of the terminal according to the predicted output value may include: in a case where the predicted output value indicates the presence of arrival of the data to be received (i.e., the arrival of data to be received is predicted) and the service type of the data to be received, and the service type is consistent with the predetermined service type, controlling the terminal to enter the active state.

For example, the predicted output value of the AI model may indicate the presence or absence of arrival of the data to be received, and the predicted output value may also indicate the service type of the data to be received. The terminal determines based on the predicted output value of the AI model that the terminal has predicted the arrival of the data to be received, and in a case where the service type of the data to be received is consistent with the predetermined service type, the terminal is controlled to enter the active state.

For another example, in a case where the terminal determines based on the predicted output value of the AI model that the terminal has not predicted the arrival of the data to be received, and/or the service type of the data to be received is inconsistent with the predetermined service type, there is no need to control the terminal to enter the active state, and the terminal maintains the current state, such as the idle state or the non-connected state.

In a possible implementation, an implementation of controlling the state of the terminal according to the predicted output value may include: in a case where the predicted output value indicates the probability or the credibility of arrival of the data to be received, and the predicted output value is greater than a first threshold, controlling the terminal to enter the active state.

For example, the predicted output value of the AI model may indicate the possibility or the credibility of the arrival of the data to be received. In a case where the terminal predicts that the possibility or the credibility of the arrival of the data to be received is greater than or equal to the first threshold, the terminal is controlled to enter the active state. For example, the possibility or the credibility of the arrival of the data to be received is predicted as 98% and the first threshold is 95%, then the terminal enters the active state.

For another example, in a case where the terminal predicts that the possibility or credibility of the arrival of the data to be received is less than the first threshold, there is no need to control the terminal to enter the active state, and the terminal maintains the current state, such as the idle state or the non-connected state.

As an example, the first threshold may be provided by the network device.

In a possible implementation, an implementation of controlling the state of the terminal according to the predicted output value may include: when the predicted output value indicates the probability or the credibility of arrival of the data to be received and the service typ e of the data to be received, in a case where the predicted output value is greater than or equal to the first threshold and the service type of the data to be received is consistent with the predetermined service type, the terminal is controlled to enter the active state.

For example, the predicted output value of the AI model may indicate the possibility or the credibility of the arrival of the data to be received, and may also indicate the service type of the data to be received. The terminal determines based on the predicted output value of the AI model that the terminal has predicted that the possibility or credibility of the arrival of the data to be received is greater than or equal to the first threshold, and the service type of the data to be received is consistent with the predetermined service type, and controls the terminal to enter the active state.

For another example, in a case where the terminal predicts that the possibility or credibility of the arrival of the data to be received is less than the first threshold, and/or the service type of the data to be received is inconsistent with the predetermined service type, there is no need to control the terminal to enter the active state, and the terminal maintains the current state, such as the idle state or the non-connected state.

In a possible implementation, an implementation of controlling the state of the terminal according to the predicted output value may include: in a case where the predicted output value indicates the arrival time and the delay requirement of the data to be received, determining a next active time of the terminal; determining, according to the arrival time and the delay requirement, whether a transmission delay requirement of the data to be received is met before the next active time arrives; in a case where the transmission delay requirement of the data to be received is not met before the next active time arrives, controlling the terminal to enter the active state.

For example, the terminal predicts the arrival time and the delay requirement of the data to be received based on the AI model. If the transmission delay requirement of the data to be received cannot be met before the next active time arrives, the terminal enters the active state. As an example, the terminal predicts that the data will arrive in slot 1, and the delay requirement of the data is 2ms, the next active time is slot 4, and a length of a slot is 1ms, then the transmission delay requirement of the data cannot be met, and the terminal enters the active state. In an example, the terminal may enter the active state after the prediction, or may enter the active state at a predicted arrival time point of the downlink data.

For example, the terminal predicts the arrival time and the delay requirement of the data to be received based on the AI model. If the transmission delay requirement of the downlink data can be met before the next active time arrives, the terminal may wait until the next active time and enter the active state when the next active time arrives.

In a possible implementation, an implementation of controlling the state of the terminal according to the predicted output value may: in a case where the predicted output value indicates the arrival time and the delay requirement of the data to be received and the service type of the data to be received, determining the next active time of the terminal; determining, according to the arrival time and the delay requirement, whether the transmission delay requirement of the data to be received is met before the next active time arrives; in a case where the transmission delay requirement of the data to be received is not met before the next active time arrives and the service type of the data to be received is consistent with the predetermined service type, controlling the terminal to enter the active state.

For example, the terminal predicts the arrival time and the delay requirement of the data to be received and predicts the service type of the data to be received, based on the AI model. If the transmission delay requirement of the downlink data cannot be met before the next active time arrives, and the service type of the data to be received is consistent with the predetermined service type, the terminal enters the active state. In an example, the terminal may enter the active state after the prediction, or may enter the active state at the predicted arrival time point of the downlink data.

For another example, the terminal predicts the arrival time and the delay requirement of the data to be received, and predicts the service type of the data to be received based on the AI model. If the transmission delay requirement of the downlink data can be met before the next active time arrives, and/or the service type of the data to be received is inconsistent with the predetermined service type, the terminal may wait until arrival of the next active time and enter the active state when the next active time arrives.

It should be noted that in an embodiment of the present disclosure, the next active time is determined according to a DRX configuration. In an implementation, an implementation of determining the next active time of the terminal may include: receiving DRX configuration information sent by the network device; and determining the next active time of the terminal according to the DRX configuration information.

As an example, in a case where the terminal is in a connected state, the DRX configuration may include an inactive timer (also referred to as an inactivity timer), an on duration timer, a cycle, a starting offset, an uplink HARQ RTT timer, a downlink HARQ RTT timer, an uplink retransmission timer, a downlink retransmission timer, etc. The network device may configure the cycle and the starting offset for the terminal, which may be used to determine a periodic starting time point of the on duration timer. Whenever the terminal receives a DCI carrying its own C-RNTI on the PDCCH, the inactivity timer may start. The terminal monitors a PDCCH only during a wake-up period, and the terminal may not monitor the PDCCH at other times, thus saving power consumption. In a case where the terminal receives a MAC PDU, the terminal sends feedback to a base station and starts the downlink HARQ RTT timer corresponding to a HARQ process. In a case where the downlink HARQ RTT timer expires, the downlink retransmission timer starts. In a case where the terminal sends a PUSCH transmission, the terminal starts the uplink HARQ RTT timer corresponding to the HARQ process. In a case where the uplink HARQ RTT timer expires, the uplink retransmission timer starts. The wake-up time includes operations of the on duration timer, the inactivity timer, the uplink retransmission timer, and the downlink retransmission timer.

As another example, in a case where the terminal is in an idle state or a non-connected state, the DRX configuration includes a DRX cycle T, the number of paging frames N in the DRX cycle, the number of paging occasions Ns included in one paging frame, a paging frame offset PF_offset, and an identifier UE_ID of the terminal. The paging occasion is a set of PDCCH monitoring occasions, and the PDCCH monitoring occasion may include a plurality of time units, such as subframes and slots.

In an embodiment of the present disclosure, a terminal may receive the DRX configuration information sent by the network device, and determine the next active time of the terminal according to the DRX configuration information.

In an example, in some embodiments of the present disclosure, in a case where the terminal is controlled to enter the active state according to the predicted output value of the AI model, a duration for which the terminal enters and maintains the active state may be configured by the network device. For example, the network device configures the duration for which the active state is maintained to be as 2ms, then in a case where the terminal is controlled to enter the active state according to the predicted output value of the AI model, the terminal is maintained in the active state for 2ms.

In a possible implementation, the terminal may start a timer when controlling the terminal to enter the active state, in which a duration of the timer is configured by the network device, and the terminal maintains in the active state before the expiration of the timer. For example, in a case where the terminal is controlled to enter the active state according to the predicted output value of the AI model, the terminal starts the timer, and the terminal maintains in the active state before the expiration of the time. The duration of the timer may be configured by the network device.

In an implementation, the duration for which the active state is maintained is consistent with a length of a delay requirement of the data to be received.

As an example, the terminal may determine the length of the delay requirement of the data to be received according to the predicted output value. That is, the length of the delay requirement of the data to be received may be obtained by prediction by the terminal. For example, the terminal may obtain the length of the delay requirement of the data to be received by prediction based on the AI model.

As another example, the terminal may determine the service type of the data to be received according to the predicted output value, and determine the length of the delay requirement of the data to be received according to the service type. For example, the terminal predicts the service type of the data to be received, such as the terminal predicts the service type of the data to be received based on the AI model, and the service type may be voice, video, emergency service, short message, multimedia, low-latency service, game, etc. The terminal determines the length of the delay requirement according to the service type. In a possible implementation, a correspondence between the service type and the length of the delay requirement may be configured by the network device or specified by a protocol.

In embodiments of the present disclosure, the terminal may control the active state by itself according to the personal preference information and the service information, capable of achieving a better energy-saving effect and avoiding a delay and loss of data in transmission.

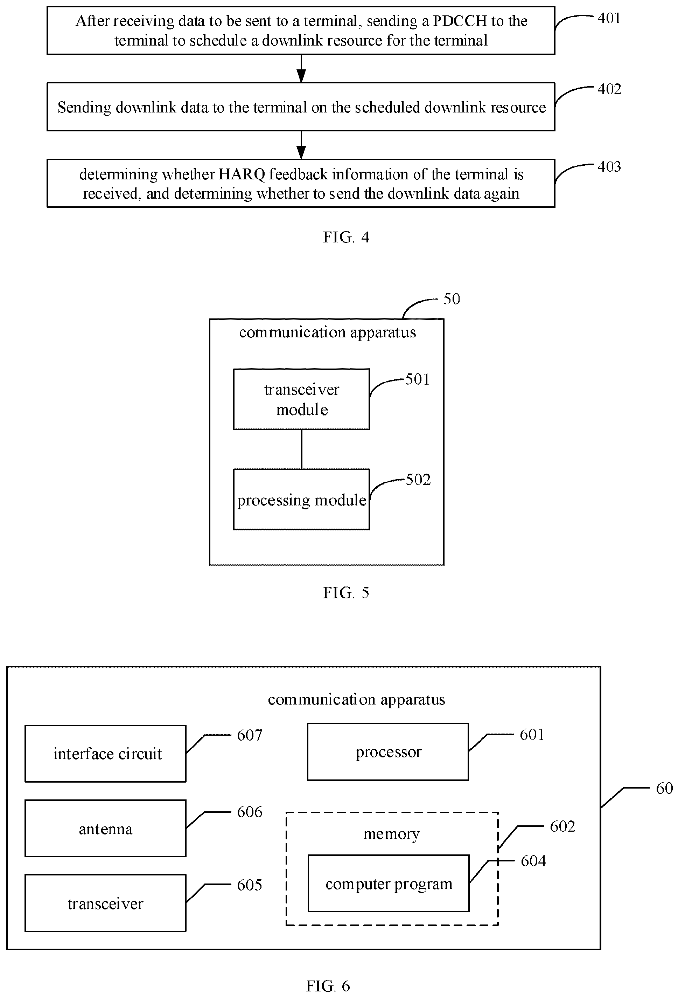

It can be understood that the above embodiment describes implementations of the method for controlling the state of the terminal proposed by the embodiments of the present disclosure from the terminal side. Embodiments of the present disclosure also proposes a method for sending data, and an implementation of the method for sending data is described from the network device side. Please refer to FIG. 4, which is a flowchart illustrating a method for sending data according to another embodiment of the present disclosure. It should be noted that the method for sending data proposed by embodiments of the present disclosure may be performed by a network device. As shown in FIG. 4, the method may include, but is not limited to, the following steps.

At step 401, after receiving data to be sent to a terminal, a PDCCH is sent to the terminal to schedule a downlink resource for the terminal.

In an example, after receiving the data to be sent to the terminal, the network device may send the PDCCH to the terminal, and the network device sends control information on the PDCCH channel to schedule uplink and downlink resources for the terminal. In order to save energy consumption of the terminal, a discontinuous reception (DRX) function has been introduced. The terminal determines whether it is in an active state based on the DRX configuration. The terminal needs to monitor the PDCCH in the active state, while the terminal does not need to monitor the PSCCH in a sleep state.

At step 402, downlink data is sent to the terminal on the scheduled downlink resource.

In an example, the network device may send the downlink data to the terminal on the scheduled downlink resource.

At step 403, it is determined whether HARQ feedback information of the terminal is received, and whether to send the downlink data again. The HARQ feedback information is determined by whether the terminal is capable of entering an active state according to a predicted output value of an AI model and receiving the PDCCH.

In an example, the terminal may predict the relevant information of the data to be received by the terminal based on the AI model, that is, the terminal may perform prediction and inference based on the AI model. The terminal may control the state of the terminal according to the predicted output value of the AI model. In an implementation, the terminal may control the terminal to enter an active state according to the predicted output value of the AI model. In another implementation, the terminal may control the terminal to enter an inactive state according to the predicted output value of the AI model. In a case where the terminal enters the active state, the terminal monitors the PDCCH. After monitoring the PDCCH, the terminal sends the HARQ feedback information to the network device. The network device may determine whether the HARQ feedback information of the terminal is received, to determine whether to send the downlink data again.

For example, the terminal may predict an arrival time and a delay requirement of data according to the AI model, and accurately enter the active state, capable of receiving the downlink data in time. An implementation of the terminal controlling the state of the terminal according to the predicted output value of the AI model may be implemented by implementations of respective embodiments of the present disclosure, which is not specifically limited in the present disclosure and is not repeated herein.

In a possible implementation, the network device determines that the HARQ feedback information of the terminal is received, and in a case where the HARQ feedback information is positive acknowledgment (ACK) information, determine to send no downlink data. For example, when determining that HARQ feedback information of the terminal is received and the HARQ feedback information is the ACK information, the network device determines that the terminal has entered the active state and received the PDCCH, and determines that there is no need to send the downlink data again.

In a possible implementation, the network device determines that the HARQ feedback information of the terminal is received, and in a case where the HARQ feedback information is negative acknowledgement (NACK) information, determines to send the downlink data again. For example, when determining that HARQ feedback information of the terminal is received and the HARQ feedback information is the NACK information, the network device determines that the terminal enters the active state but receives no PDCCH, and determines that the downlink data needs to be sent again.

In a possible implementation, the network device determines that no HARQ feedback information of the terminal is received, and determines to send the downlink data again. For example, when determining that the HARQ feedback information (such as ACK or NACK information) of the terminal has not been received, the network device determines that the terminal has not entered the active state and has not received the PDCCH, and determines that the downlink data needs to be sent again.

In some embodiments of the present disclosure, a possible implementation of determining to send the downlink data again may include: determining a next active time of the terminal; and sending the downlink data again at the next active time. The network device determines the next active time of the terminal and sends the downlink data again at the next active time.

In an implementation, the network device may determine DRX configuration information configured by the network device for the terminal, and determine the next active time of the terminal based on the DRX configuration information.

As an example, in a case where the terminal is in a connected state, the DRX configuration may include an inactive timer (also referred to as an inactivity timer), an on duration timer, a cycle, a starting offset, an uplink HARQ RTT timer, a downlink HARQ RTT timer, an uplink retransmission timer, a downlink retransmission timer, etc. The network device may configure the cycle and the starting offset for the terminal, which may be used to determine a periodic starting time point of the on duration timer. Whenever the terminal receives a DCI carrying its own C-RNTI on the PDCCH, the inactivity timer may start. The terminal monitors a PDCCH only during a wake-up period, and the terminal may not monitor the PDCCH at other times, thus saving power consumption. In a case where the terminal receives a MAC PDU, the terminal sends feedback to a base station and starts the downlink HARQ RTT timer corresponding to a HARQ process. In a case where the downlink HARQ RTT timer expires, the downlink retransmission timer starts. In a case where the terminal sends a PUSCH transmission, the terminal starts the uplink HARQ RTT timer corresponding to the HARQ process. In a case where the uplink HARQ RTT timer expires, the uplink retransmission timer starts. The wake-up time includes operations of the on duration timer, the inactivity timer, the uplink retransmission timer, and the downlink retransmission timer.

As another example, in a case where the terminal is in an idle state or a non-connected state, the DRX configuration includes a DRX cycle T, the number of paging frames N in the DRX cycle, the number of paging occasions Ns included in one paging frame, a paging frame offset PF_offset, and an identifier UE_ID of the terminal. The paging occasion is a set of PDCCH monitoring occasions, and the PDCCH monitoring occasion may include a plurality of time units, such as subframes and slots.

In this embodiment, the network device may determine the next active time of the terminal according to the DRX configuration information configured by the network device for the terminal. For example, the network device also needs to determine whether a transmission delay requirement of the data can be met before the next active time arrives according to the arrival time and the delay requirement of the data. If the transmission delay requirement of the data cannot be met before the next active time arrives, the downlink data is directly sent. If the transmission delay requirement of the data is met before the next active time arrives, the downlink data is sent at the next active time.

In an example, in some embodiments of the present disclosure, the network device may send configuration information to the terminal, and the configuration information indicates a duration for which the active state is maintained. As an example, the network device may configure a duration of a timer for the terminal, and the duration of the timer may indicate the duration for which the active state is maintained. When the terminal enters the active state, the timer is started, and the terminal maintains in the active state before expiration of the timer.

In an example, in some embodiments of the present disclosure, the network device may send the DRX configuration information to the terminal. The DRX configuration information instructs the terminal to determine the next active time of the terminal.

In the embodiment of the present disclosure, the terminal makes a prediction and an inference through the AI model, and controls the state of the terminal according to the predicted output value of the AI model. Therefore, the terminal may control its state by itself, capable of achieving a better energy-saving effect, and avoiding a delay and loss of data in transmission. In addition, the network device may determine whether the HARQ feedback information of the terminal is received, and determine whether to send the downlink data again, the HARQ feedback information is determined by whether the terminal is capable of entering the active state according to the predicted output value of the AI model and receiving the PDCCH, causing the terminal to receive data in time, and avoiding the delay and loss of data in transmission.

In the above embodiments of the disclosure, the methods according to the embodiments of the disclosure are described from the perspectives of the network device and the terminal, respectively. In order to realize each of functions in the methods according to the above embodiments of the disclosure, the network device and the terminal may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

As illustrated in FIG. 5, FIG. 5 is a schematic diagram illustrating a communication apparatus 50 according to an embodiment of the disclosure. The communication apparatus 50 illustrated in FIG. 5 may include a transceiver module 501 and a processing module 502. The transceiver module 501 may include a transmitting module and/or a receiving module. The transmitting module is configured to perform a transmitting function, and the receiving module is configured to perform a receiving function, and the transceiver module 501 may perform the transmitting function and/or the receiving function.

The communication apparatus 50 may be a terminal, an apparatus in the terminal, or an apparatus that can be used together with the terminal. Alternatively, the communication apparatus 50 may be a network device, an apparatus in the network side device, or an apparatus that can be used together with the network device.

In a case that the communication apparatus 50 is the terminal, the processing module 502 is configured to determine a predicted output value of an AI model, in which, the AI model is configured to predict relevant information of data to be received by a terminal; the processing module is further configured to control the state of the terminal according to the predicted output value.

In an implementation, the processing module 502 is configured to predict the relevant information of the data to be received by the terminal based on the AI model.

In a possible implementation, the processing module 502 is configured to periodically predict the relevant information of the data to be received by the terminal based on the AI model.

In a possible implementation, the processing module 502 is configured to acquire service information and/or personal preference information of the terminal; predict, according to the service information and/or the personal preference information, the relevant information of the data to be received by the terminal by using the AI model.

In an implementation, the predicted output value indicates at least one of: presence or absence of arrival of the data to be received; a probability or a credibility of arrival of the data to be received; an arrival time of the data to be received; a delay requirement of the data to be received; or a service type of the data to be received.

In a possible implementation, the processing module 502 is configured to, in a case where the predicted output value indicates the presence of arrival of the data to be received, control the terminal to enter an active state.

In a possible implementation, the processing module 502 is configured to, in a case where the predicted output value indicates the probability or the credibility of arrival of the data to be received, and the predicted output value is greater than a first threshold, control the terminal to enter an active state.

In a possible implementation, the processing module 502 is configured to, in a case where the predicted output value indicates the arrival time and the delay requirement of the data to be received, determine a next active time of the terminal; determine, according to the arrival time and the delay requirement, whether a transmission delay requirement of the data to be received is met before the next active time arrives; in a case where the transmission delay requirement of the data to be received is not met before the next active time arrives, control the terminal to enter an active state.

In a possible implementation, the processing module 502 is configured to, in a case where the predicted output value indicates the service type of the data to be received, and the service type is consistent with a predetermined service type, control the terminal to enter the active state.

In a possible implementation, the predetermined service type is provided by a network device.

In an implementation, the transceiver module 501 is configured to, receive discontinuous reception (DRX) configuration information sent by a network device; determine the next active time of the terminal according to the DRX configuration information.

In an implementation, a duration for which an active state is maintained is configured by a network device.

In a possible implementation, the processing module 502 is configured to, start a timer when controlling the terminal to enter the active state, in which, a duration of the timer is configured by the network device; maintain the active state of the terminal before expiration of the timer.

In an implementation, the duration for which the active state is maintained is consistent with a length of a delay requirement of the data to be received.

In an implementation, the processing module 502 is further configured to, determine the length of the delay requirement of the data to be received according to the predicted output value; or determine a service type of the data to be received according to the predicted output value, and determine the length of the delay requirement of the data to be received according to the service type.

In an implementation, the data to be received is downlink data.

In a case that the communication apparatus 50 is the network device, the transceiver module 501 is configured to, after receiving data to be sent to a terminal, send a PDCCH to the terminal, the processing module is configured to schedule a downlink resource for the terminal; the transceiver module 501 is further configured to determine whether HARQ feedback information of the terminal is received, and determine whether to send the downlink data again, in which, the HARQ feedback information is determined by whether the terminal is capable of entering an active state according to a predicted output value of an AI model and receiving the PDCCH.

In a possible implementation, the processing module 502 is specifically configured to, determine that the HARQ feedback information of the terminal is received, and in a case where the HARQ feedback information is ACK information, determine to send no downlink data; or determine that the HARQ feedback information of the terminal is received, and in a case where the HARQ feedback information is NACK information, determine to send the downlink data again; or determine that no HARQ feedback information of the terminal is received, and determine to send the downlink data again.

In a possible implementation, the processing module 502 is specifically configured to, determine a next active time of the terminal; sending the downlink data again at the next active time.

In a possible implementation, the processing module 502 is specifically configured to, determine DRX configuration information configured by the network device for the terminal; determining the next active time of the terminal according to the DRX configuration information.

In an implementation, the transceiver module 501 is further configured to, send configuration information to the terminal, in which, the configuration information indicates a duration for which the active state is maintained.

In an implementation, the transceiver module 501 is further configured to, send DRX configuration information to the terminal, in which, the DRX configuration information instructs the terminal to determine a next active time of the terminal.

Regarding the apparatus in the above embodiments, a specific manner in which each module performs operations has been described in detail in the relevant embodiments of the method, which is not repeated herein.

As illustrated in FIG. 6, FIG. 6 is a schematic diagram of another communication apparatus 60 provided by an embodiment of the disclosure. The communication apparatus 60 may be a network device, a terminal (such as a first terminal in the foregoing method embodiment), or a chip, a chip system, or a processor that supports the network device to implement the above method, or may be a chip, a chip system, or a processor that supports the terminal to implement the above method. The apparatus may be used to implement the method as described in the above method embodiments. For details, please refer to the description in the above method embodiment.

The communication apparatus 60 may include one or more processors 601. The processor 601 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 60 may include one or more memories 602 on which a computer program 604 may be stored. The processor 601 executes the computer program 604 to cause the communication apparatus 60 to perform the method described in the above method embodiments. Optionally, data may also be stored in the memory 602. The communication apparatus 60 and the memory 602 may be set separately or integrated together.

Optionally, the communication apparatus 60 may also include a transceiver 605 and an antenna 606. The transceiver 605 may be referred to as a transceiver unit, a transceiver element, or a transceiver circuit, for implementing the transceiver function. The transceiver 605 may include a receiver and a transmitter. The receiver may be referred to as a receiver element or a receiving circuit, for implementing the receiving function. The transmitter may be referred to as a transmitter element or a transmitting circuit, for implementing the transmitting function.

Optionally, the communication apparatus 60 may also include one or more interface circuits 607. The interface circuits 607 are used to receive code instructions and transmit them to the processor 601. The processor 601 runs the code instructions to cause the communication apparatus 60 to perform the method described in the method embodiments.

In a case where the communication apparatus 60 is a terminal, the processor 601 is configured to perform steps 201 and 202 in FIG. 2; or perform steps 301, 302, and 303 in FIG. 3.

In a case where the communication apparatus 60 is a network device, the transceiver 605 is configured to perform steps 401 and 402 in FIG. 4. The processor 601 is configured to perform step 403 in FIG. 4.

In an implementation, the processor 601 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 601 may store a computer program 604. When the processor 601 executes the computer program 604, the communication apparatus 60 is caused to perform the method as described in the above method embodiments. The above computer program may be solidified in the processor 601, in such case, the processor 601 may be implemented by hardware.

In an implementation, the communication apparatus 60 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or a terminal (such as a first terminal in the foregoing method embodiment), but the scope of the communication apparatus described in the disclosure is not limited thereto, and the structure of the communication apparatus may not be limited by FIG. 6. The communication apparatus may be a stand-alone device or may be part of a larger device. For example, the described communication apparatus may be:
(1) a stand-alone IC, chip, chip system or subsystem;
(2) a set of ICs including one or more ICs, optionally, the set of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

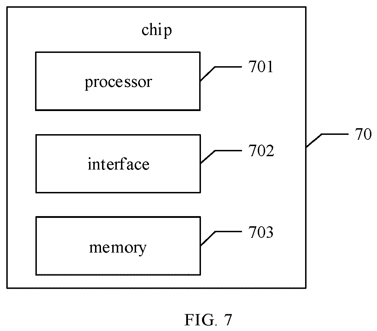

For a case where the communication apparatus may be a chip or a chip system, please refer to the schematic diagram of a chip shown in FIG. 7. In FIG. 7, the chip 70 includes a processor 701 and an interface 702. There may be one or more processors 701, and there may be a plurality of interfaces 702.

For a case where the chip is used to implement functions of the terminal in an embodiment of the present disclosure,
the processor 701 is configured to determine a predicted output value of an AI model, in which, the AI model is configured to predict relevant information of data to be received by a terminal; the processing module 701 is further configured to control the state of the terminal according to the predicted output value.

In an implementation, the processor 701 is configured to predict the relevant information of the data to be received by the terminal based on the AI model.

In a possible implementation, the processor 701 is configured to periodically predict the relevant information of the data to be received by the terminal based on the AI model.

In a possible implementation, the processor 701 is configured to acquire service information and/or personal preference information of the terminal; predict, according to the service information and/or the personal preference information, the relevant information of the data to be received by the terminal by using the AI model.

In an implementation, the predicted output value indicates at least one of: presence or absence of arrival of the data to be received; a probability or a credibility of arrival of the data to be received; an arrival time of the data to be received; a delay requirement of the data to be received; or a service type of the data to be received.

In a possible implementation, the processor 701 is configured to, in a case where the predicted output value indicates the presence of arrival of the data to be received, control the terminal to enter an active state.

In a possible implementation, the processor 701 is configured to, in a case where the predicted output value indicates the probability or the credibility of arrival of the data to be received, and the predicted output value is greater than a first threshold, control the terminal to enter an active state.

In a possible implementation, the processor 701 is configured to, in a case where the predicted output value indicates the arrival time and the delay requirement of the data to be received, determine a next active time of the terminal; determine, according to the arrival time and the delay requirement, whether a transmission delay requirement of the data to be received is met before the next active time arrives; in a case where the transmission delay requirement of the data to be received is not met before the next active time arrives, control the terminal to enter an active state.

In a possible implementation, the processor 701 is configured to, in a case where the predicted output value indicates the service type of the data to be received, and the service type is consistent with a predetermined service type, control the terminal to enter the active state.

In a possible implementation, the predetermined service type is provided by a network device.

In an implementation, the interface 702 is configured to, receive discontinuous reception (DRX) configuration information sent by a network device; determine the next active time of the terminal according to the DRX configuration information.

In an implementation, a duration for which an active state is maintained is configured by a network device.

In a possible implementation, the processor 701 is configured to, start a timer when controlling the terminal to enter the active state, in which, a duration of the timer is configured by the network device; maintain the active state of the terminal before expiration of the timer.

In an implementation, the duration for which the active state is maintained is consistent with a length of a delay requirement of the data to be received.

In an implementation, the processor 701 is further configured to, determine the length of the delay requirement of the data to be received according to the predicted output value; or determine a service type of the data to be received according to the predicted output value, and determine the length of the delay requirement of the data to be received according to the service type.

In an implementation, the data to be received is downlink data.

For a case where the chip is used to implement functions of the network device in an embodiment of the present disclosure,
the interface 702 is configured to, after receiving data to be sent to a terminal, send a PDCCH to the terminal, the processor is configured to schedule a downlink resource for the terminal; the interface 702 is further configured to determine whether HARQ feedback information of the terminal is received, and determine whether to send the downlink data again, in which, the HARQ feedback information is determined by whether the terminal is capable of entering an active state according to a predicted output value of an AI model and receiving the PDCCH.

In a possible implementation, the processor 701 is specifically configured to, determine that the HARQ feedback information of the terminal is received, and in a case where the HARQ feedback information is ACK information, determine to send no downlink data; or determine that the HARQ feedback information of the terminal is received, and in a case where the HARQ feedback information is NACK information, determine to send the downlink data again; or determine that no HARQ feedback information of the terminal is received, and determine to send the downlink data again.

In a possible implementation, the processor 701 is specifically configured to, determine a next active time of the terminal; sending the downlink data again at the next active time.

In a possible implementation, the processor 701 is specifically configured to, determine DRX configuration information configured by the network device for the terminal; determining the next active time of the terminal according to the DRX configuration information.

In an implementation, the interface 702 is further configured to, send configuration information to the terminal, in which, the configuration information indicates a duration for which the active state is maintained.

In an implementation, the interface 702 is further configured to, send DRX configuration information to the terminal, in which, the DRX configuration information instructs the terminal to determine a next active time of the terminal.

Optionally, the chip 190 further includes a memory 1903 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

An embodiment of the disclosure also provides a communication system. The system includes a communication apparatus as a terminal and a communication apparatus as a network device in the aforementioned embodiment of FIG. 7, or the system includes a communication apparatus as a terminal and a communication apparatus as a network device in the aforementioned embodiment of FIG. 6.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for controlling a state of a terminal, performed by the terminal, comprising:
determining a predicted output value of an artificial intelligence (AI) model, wherein the AI model is configured to predict relevant information of data to be received by the terminal;
controlling the state of the terminal according to the predicted output value.

2. The method according to claim 1, further comprising:
predicting the relevant information of the data to be received by the terminal based on the AI model.

3. The method according to claim 2, wherein predicting the relevant information of the data to be received by the terminal based on the AI model comprises:
periodically predicting the relevant information of the data to be received by the terminal based on the AI model.

4. The method according to claim 2 or 3, wherein predicting the relevant information of the data to be received by the terminal based on the AI model comprises:
acquiring service information and/or personal preference information of the terminal;
predicting, according to the service information and/or the personal preference information, the relevant information of the data to be received by the terminal by using the AI model.

5. The method according to any one of claims 1 to 4, wherein the predicted output value indicates at least one of:
presence or absence of arrival of the data to be received;
a probability or a credibility of arrival of the data to be received;
an arrival time of the data to be received;
a delay requirement of the data to be received; or
a service type of the data to be received.

6. The method according to claim 5, wherein controlling the state of the terminal according to the predicted output value comprises:
in a case where the predicted output value indicates the presence of arrival of the data to be received, controlling the terminal to enter an active state.

7. The method according to claim 5, wherein controlling the state of the terminal according to the predicted output value comprises:
in a case where the predicted output value indicates the probability or the credibility of arrival of the data to be received, and the predicted output value is greater than a first threshold, controlling the terminal to enter an active state.

8. The method according to claim 5, wherein controlling the state of the terminal according to the predicted output value comprises:
in a case where the predicted output value indicates the arrival time and the delay requirement of the data to be received, determining a next active time of the terminal;
determining, according to the arrival time and the delay requirement, whether a transmission delay requirement of the data to be received is met before the next active time arrives;
in a case where the transmission delay requirement of the data to be received is not met before the next active time arrives, controlling the terminal to enter an active state.

9. The method according to any one of claims 6 to 8, wherein controlling the state of the terminal according to the predicted output value comprises:
in a case where the predicted output value indicates the service type of the data to be received, and the service type is consistent with a predetermined service type, controlling the terminal to enter the active state.

10. The method according to claim 9, wherein the predetermined service type is provided by a network device.

11. The method according to claim 8, wherein determining the next active time of the terminal comprises:
receiving discontinuous reception (DRX) configuration information sent by a network device;
determining the next active time of the terminal according to the DRX configuration information.

12. The method according to any one of claims 1 to 11, wherein a duration for which an active state is maintained is configured by a network device.

13. The method according to claim 12, further comprising:
starting a timer when controlling the terminal to enter the active state, wherein a duration of the timer is configured by the network device;
maintaining the active state of the terminal before expiration of the timer.

14. The method according to any one of claims 1 to 11, wherein a duration for which the active state is maintained is consistent with a length of a delay requirement of the data to be received.

15. The method according to claim 14, further comprising:
determining the length of the delay requirement of the data to be received according to the predicted output value; or
determining a service type of the data to be received according to the predicted output value, and determining the length of the delay requirement of the data to be received according to the service type.

16. The method according to any one of claims 1 to 15, wherein the data to be received is downlink data.

17. A method for sending data, performed by a network device, comprising:
after receiving data to be sent to a terminal, sending a physical downlink control channel (PDCCH) to the terminal to schedule a downlink resource for the terminal;
sending downlink data to the terminal on the scheduled downlink resource;
determining whether hybrid automatic repeat request (HARQ) feedback information of the terminal is received, and determining whether to send the downlink data again, wherein the HARQ feedback information is determined by whether the terminal is capable of entering an active state according to a predicted output value of an artificial intelligence (AI) model and receiving the PDCCH.

18. The method according to claim 17, wherein determining whether the HARQ feedback information of the terminal is received, and determining whether to send the downlink data again comprises at least one of:
determining that the HARQ feedback information of the terminal is received, and in a case where the HARQ feedback information is positive acknowledgment (ACK) information, determining to send no downlink data;
determining that the HARQ feedback information of the terminal is received, and in a case where the HARQ feedback information is negative acknowledgement (NACK) information, determining to send the downlink data again; or
determining that no HARQ feedback information of the terminal is received, and determining to send the downlink data again.

19. The method according to claim 18, wherein determining to send the downlink data again comprises:
determining a next active time of the terminal;
sending the downlink data again at the next active time.

20. The method according to claim 19, wherein determining the next active time of the terminal comprises:
determining discontinuous reception (DRX) configuration information configured by the network device for the terminal;
determining the next active time of the terminal according to the DRX configuration information.

21. The method according to any one of claims 17 to 20, further comprising:
sending configuration information to the terminal, wherein the configuration information indicates a duration for which the active state is maintained.

22. The method according to any one of claims 17 to 20, further comprising:
sending DRX configuration information to the terminal, wherein the DRX configuration information instructs the terminal to determine a next active time of the terminal.

23. A communication device, comprising:
a processing module, configured to determine a predicted output value of an artificial intelligence (AI) model, wherein the AI model is configured to predict relevant information of data to be received by a terminal;
the processing module being configured to control the state of the terminal according to the predicted output value.

24. A communication device, comprising:
a transceiver module, configured to send a physical downlink control channel (PDCCH) to a terminal after receiving data to be sent to the terminal;
a processing module, configured to schedule a downlink resource for the terminal;
the transceiver module being configured to send downlink data to the terminal on the scheduled downlink resource;
the processing module being configured to determine whether hybrid automatic repeat request (HARQ) feedback information of the terminal is received, and determine whether to send the downlink data again, wherein the HARQ feedback information is determined by whether the terminal is capable of entering an active state according to a predicted output value of an artificial intelligence (AI) model and receiving the PDCCH.

25. A communication device, comprising a processor and a memory having a computer program stored thereon, wherein the processor is configured to execute the computer program stored on the memory, to cause the device to perform the method according to any one of claims 1 to 16.

26. A communication device, comprising a processor and a memory having a computer program stored thereon, wherein the processor is configured to execute the computer program stored on the memory, to cause the device to perform the method according to any one of claims 17 to 22.

27. A computer-readable storage medium for storing instructions that, when executed by a processor, enable the method according to any one of claims 1 to 16 to be implemented.

28. A computer-readable storage medium for storing instructions that, when executed by a processor, enable the method according to any one of claims 17 to 22 to be implemented.
